# EUROPÄISCHE PATENTSCHRIFT

(11) **EP 1 716 992 B1**
(45) Veröffentlichungstag und Bekanntmachung des Hinweises auf die Patenterteilung: **01.08.2007**
(21) Anmeldenummer: 06002343.9
(22) Anmeldetag: 06.02.2006
(51) Int. Cl.: B27C 5/06, B65G 15/60, B27F 5/02

(54) **Werkstücktransportvorrichtung**
Workpiece transport device
Dispositif de transport de pièces à usiner

(30) Priorität: 29.04.2005 DE 102005019954
(43) Veröffentlichungstag der Anmeldung: 02.11.2006
(73) Patentinhaber: Homag Holzbearbeitungssysteme AG, 72296 Schopfloch (DE)
(72) Erfinder: Gauss, Achim, 72280 Dornstetten/Hallwangen (DE); Rathgeber, Peter, 72280 Dornstetten (DE)
(74) Vertreter: HOFFMANN EITLE

(56) Entgegenhaltungen:
- EP-A- 1 516 697
- WO-A-20/04113037
- DE-C1- 10 249 775

## Beschreibung

### Technisches Gebiet

Die vorliegende Erfindung betrifft eine Werkstücktransportvorrichtung nach dem Obergebriff von Anspruch 1.

### Stand der Technik

Eine Werkstücktransportvorrichtung der eingangs genannten Art ist beispielsweise aus der EP 1 516 697 A2 bekannt und besitzt einen endlos umlaufenden Transportriemen, auf dessen Obertrum die Werkstücke reib- und/oder formschlüssig gehalten werden, und eine feststehende Führungsvorrichtung für den Transportriemen, die eine dessen Obertrum entlang der Transportstrecke aufnehmende Führungsschiene aufweist, wobei die Führungsschiene an ihrer Oberseite eine formschlüssig an den Riemen angepasste Laufrinne besitzt und einen Boden aufweist, in welchem mit einer Druckluftquelle verbundene Luftauslassöffnungen angeordnet sind.

Derartige Werkstücktransportvorrichtungen werden vor allem eingesetzt, um schmale, plattenförmige Werkstücke wie beispielsweise Laminat- oder Fertigparkettpaneele während der Bearbeitung ihrer Schmalseiten - beispielsweise mit Nut und Feder oder "Klick"-Eingriffselementen - zu transportieren. Bei dieser Durchlaufbearbeitung müssen sehr enge Bearbeitungstoleranzen eingehalten werden, damit die Paneele beim späteren Einsatz, beispielsweise als Bodenbelag, sauber und bündig miteinander verbunden werden können. Die erforderliche Einhaltung der Bearbeitungstoleranzen wird darüber hinaus durch die hohen Transportgeschwindigkeiten von beispielsweise bis zu 200 m/min erschwert, die heutzutage für eine rationelle Durchlaufproduktion angestrebt werden.

Ferner offenbart die DE 102 49 775 C1 eine Maschine zum Profilieren der Schmalflächenseiten plattenförmiger Werkstücke mit einer Geradführungseinrichtung. Bei dieser Maschine gleiten die Werkstücke auf einer stationären Gleitbahn, die Luftauslassdüsen aufweist, um zwischen Gleitbahn und Werkstück ein Luftpolster zu erzeugen. Allerdings sind die erzielbaren Transportgeschwindigkeiten aufgrund der unvermeidlichen Reibung zwischen Gleitbahn und Werkstück begrenzt.

### Darstellung der Erfindung

Es ist Aufgabe der vorliegenden Erfindung, eine Werkstücktransportvorrichtung der eingangs genannten Art bereitzustellen, die bei hohen Transportgeschwindigkeiten eine Bearbeitung der transportierten Werkstücke mit geringer Toleranz ermöglicht.

Diese Aufgabe wird erfindungsgemäß durch eine Werkstücktransportvorrichtung nach Anspruch 1 gelöst. Vorteilhafte Weiterbildungen der Erfindung sind in den abhängigen Ansprüchen angegeben.

Der Erfindung liegt der Gedanke zugrunde, einen reibenden bzw. gleitenden Kontakt zwischen Werkzeug und Transportvorrichtung nur dort vorzusehen, wo er im Hinblick auf die geforderten Bearbeitungstoleranzen effektiv ist und die erzielbare Transportgeschwindigkeit möglichst wenig beeinträchtigt. Vor diesem Hintergrund ist erfindungsgemäß vorgesehen, dass eine Werkstücktransportvorrichtung der eingangs genannten Art eine Geradführungseinrichtung aufweist, die dazu ausgelegt ist, in eine in dem zu transportierenden Werkstück vorgesehene Führungsnut einzugreifen.

Auf diese Weise lässt sich die Positionierung der Werkstücke während des Transport- und Bearbeitungsvorganges deutlich steigern, ohne dass spürbare Abstriche bei den erzielbaren Transportgeschwindigkeiten zu verzeichnen sind.

Gemäß der vorliegenden Erfindung ist vorgesehen, dass die Werkstücktransportvorrichtung ferner mindestens eine Stützkufe aufeist, die sich seitlich neben dem Transportriemen im Wesentlichen parallel zu diesem erstreckt, und deren Oberseite im Wesentlichen bündig zu der Oberseite des Obertrums des Transportriemens ist. Durch die mindestens eine Stützkufe lässt sich eine besonders genaue Bezugsebene für die geförderten Werkstücke definieren, während gleichzeitig eine stabile Abstützung der Werkstücke während des Bearbeitungsvorgangs ermöglicht wird.

Dabei hat es sich erfindungsgemäß als vorteilhaft erwiesen, zusätzlich zu der Stützkufe mindestens eine federnd gelagerte Druckschiene vorzusehen, die sich oberhalb der Stützkufe im Wesentlichen parallel zu dieser erstreckt. Durch die federnd gelagerte Druckschiene lassen sich in Zusammenwirkung mit der darunter liegenden Stützkufe plattenförmige Werkstücke mit variierenden Dicken stabil führen, um eine genaue Positionierung der Werkstücke zu erzielen und ein Ausweichen derselben während des Bearbeitungsvorgangs zu verhindern.

Gemäß einer Weiterbildung der vorliegenden Erfindung ist vorgesehen, dass die Geradführungseinrichtung oberhalb des Transportriemens angeordnet und dazu ausgelegt ist, in eine Führungsnut einzugreifen, die in einer während des Werkstücktransports oben liegenden Oberfläche des Werkstücks vorgesehen ist. Durch diese Anordnung kann das zu bearbeitende Werkstück mit seiner so genannten Gutseite, die der mit einer Führungsnut versehenen Oberfläche des Werkstücks üblicherweise gegenüberliegt, auf dem Transportriemen liegend transportiert werden. Hierdurch wird die Gutseite des Werkstücks während des Transports vor möglichen Beschädigungen geschützt. Darüber hinaus bietet diese Art der Werkstückförderung jedoch auch Vorteile im Hinblick auf die erzielbaren Bearbeitungstoleranzen der Schmalseiten. Dabei ist zu beachten, dass die sogenannte Gutseite üblicherweise das Referenzniveau für die Lage der in die Schmalseiten einzubringenden Profilierungen bildet. Bei einem Transport der Werkstücke mit nach unten gerichteter Gutseite lässt sich die Auflageebene der Gutseite wirksam als Bezugsebene für die Bearbeitungswerkzeuge definieren, und hierdurch wird ein möglicher Einfluss von Dickentoleranzen des Werkstücks auf die Bearbeitungstoleranzen der Schmalseiten ausgeschlossen und die Notwendigkeit von Justierungen der Bearbeitungswerkzeuge in Bezug auf das zu bearbeitende Werkstück wird minimiert.

Gemäß einer Weiterbildung der vorliegenden Erfindung weist die Werkstücktransportvorrichtung eine Oberdruckeinrichtung auf, die bevorzugt einen Antrieb mit Freilauf besitzt. Durch die Oberdruckeinrichtung lässt sich das zu bearbeitende Werkstück noch stabiler und präziser fördern, mit entsprechend verbesserter Bearbeitungstoleranz. Dabei trägt der mit einem Freilauf versehene Antrieb der Oberdruckeinrichtung dazu bei, sicherzustellen, dass die Transportgeschwindigkeit des Werkstücks auch während der Bearbeitung nicht unter einen vorbestimmten Geschwindigkeitsschwellwert abfällt.

Die Geradführungseinrichtung kann im Rahmen der vorliegenden Erfindung auf vielfältige Art und Weise ausgestaltet sein. Als besonders vorteilhaft hat es sich erwiesen, dass die Geradführungseinrichtung durch mindestens ein Führungsschwert gebildet ist, das bevorzugt stationär angeordnet ist. Es ist jedoch ebenso möglich, dass die Geradführungseinrichtung als Teil eines an der Oberdruckeinrichtung umlaufenden Riemens ausgebildet ist.

Um auf das Vorsehen mehrerer Transportriemen oder Oberdruckeinrichtungen verzichten zu können, ist gemäß einer Weiterbildung vorgesehen, dass die Geradführungseinrichtung seitlich neben dem Transportriemen und/oder der Oberdruckeinrichtung angeordnet ist. Dabei hat es sich als besonders vorteilhaft erwiesen, die Geradführungseinrichtung an der Oberdruckeinrichtung anzubringen, wodurch sich eine besonders einfache und stabile Konstruktion mit entsprechend stabiler Führung der Werkstücke ergibt.

Obgleich zumindest eine Stützkufe und Druckschiene prinzipiell entlang des gesamten Obertrums des Transportriemens angeordnet sein können, hat es sich als vorteilhaft erweisen, dass die Stützkufe und/oder die Druckschiene sich nur entlang eines Teilabschnitts des Obertrums erstrecken, dessen Länge bevorzugt weniger als 20%, besonders bevorzugt weniger als 10% der Länge des Obertrums beträgt. Auf diese Weise können Stützkufen und Druckschienen gezielt im Bereich der Bearbeitungswerkzeuge angeordnet werden, während sich gleichzeitig die Reibungskräfte während des Transportvorgangs vermindern. In dieser Hinsicht hat es sich auch als vorteilhaft erwiesen, dass die Stützkufe und/oder die Druckschiene an ihren einander zugewandten Abschnitten Gleitelemente aufweisen, die beispielsweise aus PTFE oder einem anderen geeigneten Material mit geringem Reibungskoeffizienten bestehen.

### Kurze Beschreibung der Zeichnung

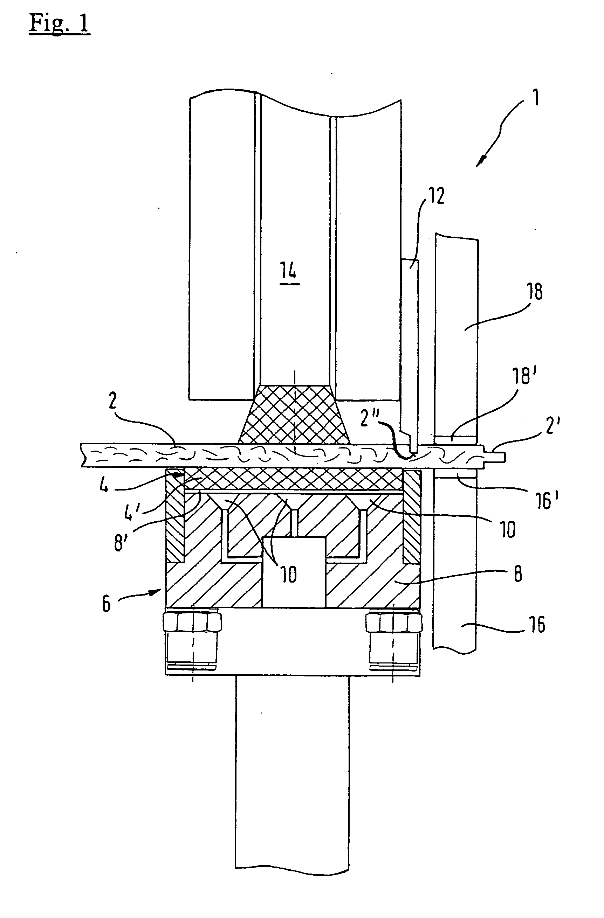

Fig. 1 zeigt schematisch eine Seitenansicht einer Werkstücktransportvorrichtung als Ausführungsform der vorliegenden Erfindung.

### Ausführliche Beschreibung bevorzugter Ausführungsformen

Bevorzugte Ausführungsformen der vorliegenden Erfindung werden nachfolgend ausführlich unter Bezugnahme auf die begleitende Zeichnung beschrieben.

Fig. 1 zeigt schematisch eine Seitenansicht einer Werkstücktransportvorrichtung 1 als beispielhafte, bevorzugte Ausführungsform der vorliegenden Erfindung. Die Werkstücktransportvorrichtung 1 dient dazu, zu bearbeitende, plattenförmige Werkstücke 2 im Durchlauf durch eine formgebend bearbeitende Maschine zu transportieren, die dazu ausgelegt ist, die freiliegenden Seitenflächen 2' der Werkstücke 2 mit Profilierungen wie beispielsweise Nut und Feder oder sogenannten "Klick"-Eingriffselementen zu versehen.

Die in Fig. 1 gezeigte Werkstücktransportvorrichtung 1 umfasst einen endlos umlaufenden Transportriemen 4, von dem in Fig. 1 nur dessen Obertrum 4' gezeigt ist und der dazu ausgelegt ist, die zu transportierenden Werkstücke 2 reibschlüssig zu lagern und zu fördern. Der Transportriemen 4 ist auf einer feststehenden Führungsvorrichtung 6 geführt, die eine dessen Obertrum 4' entlang einer Transportstrecke aufnehmende Führungsschiene 8 aufweist. Die Führungsschiene 8 besitzt an ihrer Oberseite eine Laufrinne 8', die formschlüssig an den jeweiligen Riemen 4 angepasst ist, und weist einen Boden auf, in welchem Luftauslassöffnungen 10 angeordnet sind, die mit einer nicht gezeigten Druckluftquelle kommunizieren. Hierdurch lässt sich zwischen dem Obertrum 4' des Transportriemens 4 und der Führungsschiene 8 ein Luftkissen erzeugen, das einen sanften und reibungsarmen Transportbetrieb ermöglicht.

Ferner weist die Werkstücktransportvorrichtung 1 eine Oberdruckeinrichtung 14 auf, die in der vorliegenden Ausführungsform durch einen auf Rollen geführten, umlaufenden Riemen gebildet ist. Die Rollen der Oberdruckeinrichtung sind durch einen Antrieb mit Freilauf angetrieben. Seitlich an der Oberdruckeinrichtung 14 ist ein Führungsschwert bzw. sind gegebenenfalls mehrere Führungsschwerter 12 hintereinander angebracht. Das mindestens eine Führungsschwert 12 erstreckt sich von der Oberdruckeinrichtung 14 nach unten und ist dazu ausgelegt, in eine in dem zu transportierenden Werkstück 2 vorgesehene Führungsnut 2'' während des Transports einzugreifen. Bei der gezeigten Konfiguration wird das Werkstück 2 somit mit seiner "Gutseite" nach unten auf dem Transportriemen 4 aufliegend transportiert, während die der Gutseite gegenüberliegende Führungsnut 2'' nach oben gerichtet ist.

Weiterhin umfasst die Werkstücktransportvorrichtung der vorliegenden Ausführungsform eine Anzahl von paarweise vorgesehenen Stützkufen 16 und Druckschienen 18. Die Stützkufen 16 erstrecken sich seitlich neben dem Transportriemen 4 im Wesentlichen parallel zu diesem, wobei deren Oberseite im Wesentlichen bündig zu der Oberseite des Obertrums 4' des Transportriemens 4 ist. Die Druckschienen 18 erstrecken sich im Wesentlichen parallel zu der zugeordneten Stützkufe 16 und sind federnd derart gelagert, dass der Abstand zwischen der Stützkufe 16 und der entsprechenden Druckschiene 18 an die Dicke der transportierten Werkstücke 2 angepasst werden kann. Dabei sind die Stützkufen- und Druckschienenpaare örtlich entlang des Transportriemens 4 an denjenigen Stellen angeordnet, wo eine Bearbeitung der Werkstücke durch nicht gezeigte Bearbeitungswerkzeuge erfolgen soll. Die Länge der Stützkufen und Druckschienen kann in der Transportrichtung beispielsweise 200 mm betragen, während die Transportstrecke eine Gesamtlänge von beispielsweise 6000 mm besitzen kann.

Um die an den Stützkufen 16 und Druckschienen 18 auftretende Gleitreibung gegenüber dem Werkstück 2 zu vermindern und somit einen sanften und präzisen Werkstücktransport zu ermöglichen, weisen die Stützkufe 16 und die Druckschiene 18 an ihren einander zugewandten Abschnitten Gleitelemente 16', 18' auf, die beispielsweise aus PTFE oder einem anderen geeigneten Material mit geringem Reibungskoeffizienten bestehen.

Der Betrieb der erfindungsgemäßen Werkstücktransportvorrichtung vollzieht sich beispielsweise wie folgt. Zunächst wird das plattenförmige Werkstück 2 in einer der Werkstücktransportvorrichtung vorgeschalteten Sägevorrichtung mit einer Führungsnut 2'' versehen, die sich kontinuierlich in Längsrichtung des Werkstücks, d.h. in der späteren Transportrichtung erstreckt. Anschließend wird das Werkstück 2 in die Werkstücktransportvorrichtung in den Spalt zwischen dem Obertrum 4' und der Oberdruckeinrichtung 14 zugeführt. Dabei greift das vordere (untere) Ende des am weitesten stromaufwärts gelegenen Führungsschwerts 12 in die Führungsnut 2'' des zu transportierenden Werkstücks 2 ein.

Durch die Antriebskraft des Transportriemens 4 und gegebenenfalls der Oberdruckeinrichtung 14 wird das Werkstück 2 entlang der Transportstrecke gefördert, bis es das erste Paar von Stützkufe 16 und Druckschiene 18 erreicht und in den dazwischen gebildeten Spalt eintritt. Dabei passt sich die Höhenlage der federnd gelagerten Druckschiene 18 an die Dicke des geförderten Werkstücks 2 an. Im Bereich der jeweiligen Stützkufen 16 und Druckschienen 18 wird das geförderte Werkstück 2 im Bereich der freiliegenden Seitenfläche 2' durch nicht gezeigte Bearbeitungswerkzeuge mit einer gewünschten Profilierung versehen. Dieser Vorgang kann sich entlang der Transportstrecke mehrfach wiederholen. Abschließend wird das Werkstück aus der Werkstücktransportvorrichtung 1 ausgefördert und gegebenenfalls an eine nach gelagerte Bearbeitungsstufe weitergegeben.

## Patentansprüche

1. Werkstücktransportvorrichtung (1) für eine die Werkstücke (2) im Durchlauf an dabei freiliegenden Seitenflächen (2') formgebend bearbeitende Maschine, mit
mindestens einem endlos umlaufenden Transportriemen (4), auf dessen Obertrum (4') die Werkstücke (2) reibund/oder formschlüssig gehalten werden, und
mit einer feststehenden Führungsvorrichtung (6) für den Transportriemen (4), die eine dessen Obertrum (4') entlang einer Transportstrecke aufnehmende Führungsschiene (8) aufweist, wobei
die Führungsschiene (8) an ihrer Oberseite eine formschlüssig an den jeweiligen Riemen angepasste Laufrinne (8') besitzt und einen Boden aufweist, in welchem mit einer Druckluftquelle verbundene Luftauslassöffnungen (10) angeordnet sind,
**dadurch gekennzeichnet, dass**
die Werkstücktransportvorrichtung (1) eine Geradführungseinrichtung (12) aufweist, die dazu ausgelegt ist, in eine in dem zu transportierenden Werkstück (2) vorgesehene Führungsnut (2'') einzugreifen,
ferner mindestens eine Stützkufe (16) aufweist, die sich seitlich neben dem Transportriemen (4) im wesentlichen parallel zu diesem erstreckt, und deren Oberseite im wesentlichen bündig zu der Oberseite des Obertrums (4') des Transportriemens (4) ist, und ferner mindestens eine federnd gelagerte Druckschiene (18) aufweist, die sich oberhalb der Stützkufe (16) im wesentlichen parallel zu dieser erstreckt.

2. Werkstücktransportvorrichtung nach Anspruch 1, **dadurch gekennzeichnet, dass** die Geradführungseinrichtung (12) oberhalb des Transportriemens (4) angeordnet und dazu ausgelegt ist, in eine Führungsnut (2'') einzugreifen, die in einer während des Werkstücktransports oben liegenden Oberfläche des Werkstücks (2) vorgesehen ist.

3. Werkstücktransportvorrichtung nach Anspruch 1 oder 2, **dadurch gekennzeichnet, dass** sie ferner eine Oberdruckeinrichtung (14) aufweist, die bevorzugt einen Antrieb mit Freilauf besitzt.

4. Werkstücktransportvorrichtung nach einem der vorhergehenden Ansprüche, **dadurch gekennzeichnet, dass** die Geradführungseinrichtung (12) durch mindestens ein Führungsschwert (12) gebildet ist, das bevorzugt stationär angeordnet ist.

5. Werkstücktransportvorrichtung nach einem der vorhergehenden Ansprüche, **dadurch gekennzeichnet, dass** die Geradführungseinrichtung (12) seitlich neben dem Transportriemen (4) und/oder der Oberdruckeinrichtung (14) angeordnet ist.

6. Werkstücktransportvorrichtung nach einem der vorhergehenden Ansprüche, **dadurch gekennzeichnet, dass** die Geradführungseinrichtung (12) an der Oberdruckeinrichtung (14) angebracht ist.

7. Werkstücktransportvorrichtung nach einem der vorhergehenden Ansprüche, **dadurch gekennzeichnet, dass** die Stützkufe (16) und/oder die Druckschiene (18) sich nur entlang eines Teilabschnitts des Obertrums (4') erstrecken, dessen Länge bevorzugt weniger als 20 %, besonders bevorzugt weniger als 10 % der Länge des Obertrums (4') beträgt.

8. Werkstücktransportvorrichtung nach einem der vorhergehenden Ansprüche, **dadurch gekennzeichnet, dass** die Stützkufe (16) und/oder die Druckschiene (18) an ihren einander zugewandten Abschnitten Gleitelemente (16', 18') aufweisen.

## Claims

1. Work piece conveying device (1) for a machine which shapes the work pieces (2) as they pass through on side surfaces (2') which are exposed in the process, having
at least one endlessly rotating conveyor belt (4) on the upper run (4') of which the work pieces (2) are held in friction-locking and/or form-locking relationship, and
having a stationary guide device (6) for the conveyor belt (4), comprising a guide rail (8) which receives its upper run (4') along a conveyor zone,
the guide rail (8) having a channel (8') adapted to the respective belt in form-locking relationship on its upper side and comprising a bottom in which are arranged air outlet openings (10) connected to a compressed air source,
**characterised in that**
the work piece conveying device (1) comprises a straight-line mechanism (12) which is designed to engage in a guide groove (2'') provided in the work piece (2) to be conveyed,
further comprises at least one support skid (16) which extends laterally adjacent to the conveyor belt (4) substantially parallel thereto, and of which the upper side is substantially flush with the upper side of the upper run (4') of the conveyor belt (4), and further comprises at least one spring-mounted pressure rail (18) which extends above the support skid (16) substantially parallel thereto.

2. Work piece conveying device according to claim 1; **characterised in that** the straight-line mechanism (12) is arranged above the conveyor belt (4) and designed to engage in a guide groove (2'') which is provided in a surface of the work piece (2) which is on top during transport of the work piece.

3. Work piece conveying device according to claim 1 or 2, **characterised in that** it further comprises a downstroke device (14) which preferably has a drive with freewheel.

4. Work piece conveying device according to any of the preceding claims, **characterised in that** the straight-line mechanism (12) is formed by at least one guide bar (12) which is preferably arranged stationarily.

5. Work piece conveying device according to any of the preceding claims, **characterised in that** the straight-line mechanism (12) is arranged laterally adjacent to the conveyor belt (4) and/or the downstroke device (14).

6. Work piece conveying device according to any of the preceding claims, **characterised in that** the straight-line mechanism (12) is mounted on the downstroke device (14).

7. Work piece conveying device according to any of the preceding claims, **characterised in that** the support skid (16) and/or the pressure rail (18) extend only along part of the upper run (4') of which the length is preferably less than 20%, particularly preferably less than 10% of the length of the upper run (4').

8. Work piece conveying device according to any of the preceding claims, **characterised in that** the support skid (16) and/or the pressure rail (18) comprise sliding elements (16', 18') on sections facing towards each other.

## Revendications

1. Dispositif de transport de pièces à usiner (1), pour une machine travaillant les pièces à usiner (2), en leur donnant une forme, au passage sur des faces latérales (2') exposées librement, avec
au moins une courroie de transport (4) en circulation, sans fin, sur le drain supérieur (4') de laquelle les pièces à usiner (2) sont maintenues par une liaison à friction et/ou une liaison à ajustement de forme,
avec un dispositif de guidage (6) stationnaire pour la courroie de transport (4), qui présente une glissière de guidage (8) supportant son brin supérieur (4') le long d'un chemin de transport, où
la glissière de guidage (8) comprend, sur sa face supérieure, une goulotte de passage (8'), à la forme adaptée à la courroie respective et présentant un fond, dans lequel sont disposées des ouvertures d'échappement d'air (10) reliées à une source d'air comprimé,
**caractérisé en ce que**
le dispositif de transport de pièces à usiner (1) présente un dispositif de guidage rectiligne (12), conçu pour s'engager dans une gorge de guidage (2") prévue dans la pièce à usiner (2) à transporter,
il présente en outre au moins un coussin d'appui (16), s'étendant latéralement à côté de la courroie de transport (4) sensiblement parallèlement à celle-ci et dont la face supérieure est sensiblement en affleurement à la face supérieure du bras supérieur (4') de la courroie de transport 4), et présente en outre au moins une glissière de pressage (18) montée élastiquement, s'étendant au-dessus du coussin d'appui (16), sensiblement parallèlement à celui-ci.

2. Dispositif de transport de pièces à usiner selon la revendication 1, **caractérisé en ce que** le dispositif de guidage rectiligne (12) est disposé au-dessus de la courroie de transport (4) et est conçu pour s'engager dans une gorge de guidage (2"), prévue dans une surface, située en partie supérieure pendant le transport de la pièce à usiner, de la pièce à usiner (2).

3. Dispositif de transport de pièces à usiner selon la revendication 1 ou 2, **caractérisé en ce qu'**il présente en outre un dispositif de pressage par le dessus (14), comprenant de préférence un entraînement avec roue libre.

4. Dispositif de transport de pièces à usiner selon l'une des revendications précédentes, **caractérisé en ce que** le dispositif de guidage rectiligne (12) est formé par au moins une lame de guidage (12), disposée de préférence de façon stationnaire.

5. Dispositif de transport de pièces à usiner selon l'une des revendications précédentes, **caractérisé en ce que** le dispositif de guidage rectiligne (12) est disposé latéralement à côté de la courroie de transport (4) et/ou du dispositif de pressage par le dessus (14).

6. Dispositif de transport de pièces à usiner selon l'une des revendications précédentes, **caractérisé en ce que** le dispositif de guidage rectiligne (12) est monté sur le dispositif de pressage par le dessus (14).

7. Dispositif de transport de pièces à usiner selon l'une des revendications précédentes, **caractérisé en ce que** le coussin d'appui (16) et/ou la glissière de pressage (18) ne s'étendent que le long d'un tronçon partiel du brin supérieur (4'), dont la longueur de préférence est inférieure à 20 %, de façon particulièrement préférée inférieure à 10 % de la longueur du brin supérieur (4').

8. Dispositif de transport de pièces à usiner selon l'une des revendications précédentes, **caractérisé en ce que** le coussin d'appui (16) et/ou la glissière de pressage (18) présentent des éléments de glissement (16', 18') sur leurs tronçons tournés les uns vers les autres.
